# EUROPÄISCHE PATENTSCHRIFT

(11) **EP 3 535 051 B1**
(45) Veröffentlichungstag und Bekanntmachung des Hinweises auf die Patenterteilung: **29.07.2020**
(21) Anmeldenummer: 17772013.3
(22) Anmeldetag: 15.09.2017
(51) Int. Cl.: B01J 2/02, B01J 2/26

(54) **VORRICHTUNG ZUM VERTROPFEN EINES FLIESSFÄHIGEN PRODUKTS UND VERFAHREN ZUM BETREIBEN EINER SOLCHEN VORRICHTUNG**
DEVICE FOR EXPELLING DROPS OF A FLOWABLE PRODUCT, AND METHOD FOR OPERATING ONE SUCH DEVICE
DISPOSITIF POUR LA FORMATION DE GOUTTELETTES À PARTIR D'UN PRODUIT COULANT ET PROCÉDÉ POUR FAIRE FONCTIONNER UN DISPOSITIF DE CE TYPE

(30) Priorität: 02.11.2016 DE 102016221501
(43) Veröffentlichungstag der Anmeldung: 11.09.2019
(73) Patentinhaber: IPCO Germany GmbH, 70736 Fellbach (DE)
(72) Erfinder: SCHMIDT, Bernd, 73240 Wendlingen (DE); PIDDUBNYI, Sviatoslav, 70327 Stuttgart (DE); HÄFELE, Dietmar, 71554 Weissach im Tal (DE)
(74) Vertreter: Patentanwälte Ruff, Wilhelm, Beier, Dauster & Partner mbB
(86) Internationale Anmeldenummer: PCT/EP2017/073250
(87) Internationale Veröffentlichungsnummer: WO 2018/082838

(56) Entgegenhaltungen:
- WO-A1-91/12075
- DE-A1- 2 853 054
- DE-A1- 2 941 802
- DE-A1- 3 421 625
- DE-A1-102007 007 310
- US-A1- 2010 242 556

## Beschreibung

Die Erfindung betrifft eine Vorrichtung zum Vertropfen eines fließfähigen Produkts mit einem Außenrohr, das drehbar auf einem Kern angeordnet ist und mit mehreren Durchgangsöffnungen versehen ist, wobei in dem Kern eine Zuführeinrichtung für das zu vertropfende Produkt und eine am Innenumfang des Außenrohrs anliegende Verteilvorrichtung vorgesehen sind. Die Erfindung betrifft auch ein Verfahren zum Betreiben einer solchen Vorrichtung.

Eine Vorrichtung und ein Verfahren zum Vertropfen eines fliessfähigen Produkts sind beispielsweise aus der DE 28 53 054 A1 bekannt.

Mit der Erfindung soll eine verbesserte Vorrichtung zum Vertropfen eines fließfähigen Produkts und ein verbessertes Verfahren zum Betreiben einer solchen Vorrichtung angegeben werden. Erfindungsgemäß ist hierzu eine Vorrichtung mit den Merkmalen von Anspruch 1 und ein Verfahren mit den Merkmalen von Anspruch 13 vorgesehen. Vorteilhafte Weiterbildungen der Erfindung sind in den Unteransprüchen angegeben.

Bei einer erfindungsgemäßen Vorrichtung zum Vertropfen eines fließfähigen Produkts mit einem Außenrohr, das drehbar auf einem Kern angeordnet ist und mit mehreren Durchgangsöffnungen versehen ist, wobei in dem Kern eine Zuführeinrichtung für das zu vertropfende Produkt und eine am Innenumfang des Außenrohrs anliegende Verteilvorrichtung vorgesehen sind, ist eine Einrichtung zum Reinigen eines Außenumfangs des Außenrohrs vorgesehen, wobei die Einrichtung einen Reinigungsspachtel, eine sich parallel zu einer Mittellängsachse des Außenrohrs erstreckende Führungsschiene für den Reinigungsspachtel und erste Antriebsmittel zum Bewegen des Reinigungsspachtels entlang der Führungsschiene aufweist.

Gemäß der Erfindung wird vorgeschlagen, den Außenumfang des Außenrohrs mit einem Reinigungsspachtel zu reinigen, der parallel zu einer Mittellängsachse des Außenrohrs bewegt wird. Mittels eines Reinigungsspachtels kann eine gründliche, schnelle und dabei für das Material der Außentrommel schonende Reinigung erfolgen. Beispielsweise kann die Außentrommel mit einer Beschichtung versehen sein, um das Anhaften des zu vertropfenden Produkts zu verhindern. Eine solche Beschichtung ist zwangsläufig dem Verschleiß unterworfen. Durch das erfindungsgemäße Vorsehen eines Reinigungsspachtels, der parallel zur Mittellängsachse des Außenrohrs bewegt wird, wird eine geringe mechanische Belastung der Oberfläche des Außenrohrs erreicht und dennoch eine gute Reinigungswirkung erzielt.

Speziell können mit dem Reinigungsspachtel auf dem Außenumfang anhaftende Produktreste abgehoben und entfernt werden, anstatt, beispielsweise mittels einer Abzugslippe, die Produktreste lediglich auf dem Außenumfang großflächig zu verteilen. Der Reinigungsspachtel kann so angeordnet werden, dass die vom Außenrohr abgehobenen Produktreste direkt auf ein unter dem Außenrohr durchlaufendes Stahlband fallen.

In Weiterbildung der Erfindung sind zweite Antriebsmittel zum Anlegen des Reinigungsspachtels an den Außenumfang und zum Abheben des Reinigungsspachtels von dem Außenumfang des Außenrohrs vorgesehen.

Auf diese Weise kann ein Reinigungsbetrieb eingestellt werden und der Reinigungsspachtel kann außerhalb des Reinigungsbetriebs von dem Außenumfang abgehoben werden. Dadurch lässt sich zum einen ein Reinigungsbetrieb nur von Zeit zu Zeit einstellen und darüber hinaus wird auch eine mechanische Belastung der Oberfläche der Außentrommel und auch eine mechanische Belastung des Reinigungsspachtels erheblich verringert.

In Weiterbildung der Erfindung ist der Reinigungsspachtel so angeordnet, dass im an den Außenumfang angelegten Zustand auf einer in Bewegungsrichtung des Reinigungsspachtels vorne liegenden Seite eine sich an eine Vorderkante des Reinigungsspachtels anschließende Fläche des Reinigungsspachtels und der Außenumfang des Außenrohrs einen Winkel von mehr als 90°, insbesondere mehr als 135°, einschließen.

Mit einer solchen Anordnung des Reinigungsspachtels kann ein Abheben der Verunreinigungen durch den Reinigungsspachtel erzielt werden. Es kann beispielsweise vorgesehen sein, bei einer Rückbewegung des Reinigungsspachtels diesen entweder von dem Außenumfang abzuheben oder umzuklappen, um dann in der entgegengesetzten Bewegungsrichtung wieder die gleichen Winkelverhältnisse zu erzielen.

In Weiterbildung der Erfindung ist der Reinigungsspachtel so angeordnet, dass im an den Außenumfang angelegten Zustand und bei sich im Reinigungsbetrieb drehendem Außenrohr die Vorderkante des Reinigungsspachtels schräg zur Bewegungsrichtung des Außenrohrs im Berührungsbereich zwischen Reinigungsspachtel und Außenumfang des Außenrohrs angeordnet ist, und dass ein in Bewegungsrichtung des Reinigungsspachtels vor der Mitte des Berührungsbereichs liegender Abschnitt der Vorderkante mit der Bewegungsrichtung des Außenrohrs einen kleineren Winkel einschließt als ein in Bewegungsrichtung hinter der Mitte des Berührungsbereichs liegender Abschnitt der Vorderkante.

Durch eine solche schräge Anordnung wird das Abheben von Produktresten mittels des Reinigungsspachtels begünstigt, da eben der Reinigungsspachtel schräg gegen die Bewegungsrichtung des Außenumfangs angestellt ist. Durch eine schräge Anordnung des Abstreifers in dieser Art und Weise wird auch ein Mitziehen des Abstreifers durch das sich drehende Außenrohr verhindert und es kann beispielsweise auch erreicht werden, dass die abgehobenen Produktreste direkt auf das Stahlband fallen.

In Weiterbildung der Erfindung ist der Reinigungsspachtel aus einem gummielastischen Werkstoff gebildet, insbesondere aus Polyester-Urethan-Kautschuk.

Ein gummielastischer Werkstoff hat sich bei der Realisierung der Erfindung als sehr vorteilhaft herausgestellt. Zum einen können Produktreste mittels des Reinigungsspachtels aus gummielastischem Material zuverlässig vom Außenumfang des Außenrohrs abgehoben werden. Gleichzeitig wird eine mechanische Belastung der Oberfläche des Außenumfangs gering gehalten. Besonders geeignet ist Polyester-Urethan-Kautschuk, der beispielsweise unter der Produktbezeichnung "Vulkollan" erhältlich ist.

In Weiterbildung der Erfindung ist wenigstens eine Sprühdüse zum Besprühen des Außenumfangs des Außenrohrs mit einer Reinigungsflüssigkeit vorgesehen.

Auf diese Weise können eventuell angetrocknete Produktreste aufgeweicht werden, so dass diese zuverlässig entfernt werden können. Beispielsweise kann auch vorgesehen sein, die Produktreste mittels der Reinigungsflüssigkeit in gewissem Maße zu verflüssigen und dann mit dem Reinigungsspachtel abzuziehen. Vorteilhafterweise wird Wasser als Reinigungsflüssigkeit verwendet.

In Weiterbildung der Erfindung ist die wenigstens eine Sprühdüse im Bereich des Reinigungsspachtels angeordnet und wird zusammen mit dem Reinigungsspachtel bewegt.

Auf diese Weise kann die Reinigungsflüssigkeit zielgerichtet dort aufgebracht werden, wo der Reinigungsspachtel den Außenumfang des Außenrohrs berührt.

In Weiterbildung der Erfindung weisen die ersten Antriebsmittel einen pneumatischen Linearantrieb auf.

Mittels eines pneumatischen Linearantriebs kann auch in explosionsgeschützten Umgebungen die gewünschte Bewegung des Reinigungsspachtels erzielt werden.

In Weiterbildung der Erfindung weisen die zweiten Antriebsmittel wenigstens einen pneumatischen Zylinder auf.

Auch zum Abheben und Wiederanlegen des Reinigungsspachtels an den Außenumfang des Außenrohrs wird vorteilhafterweise ein pneumatischer Antrieb verwendet. Dadurch kann die erfindungsgemäße Vorrichtung auch in explosionsgeschützten Einrichtungen eingesetzt werden und beispielsweise können sowohl der Linearantrieb als auch der pneumatische Zylinder zum Anheben und Wiederanlegen des Reinigungsspachtels unterhalb einer Schutzhaube der Vorrichtung angeordnet werden.

In Weiterbildung der Erfindung sind Positionssensoren an der Führungsschiene zum Erfassen wenigstens von Endpositionen des Reinigungsspachtels vorgesehen.

In Weiterbildung der Erfindung ist eine pneumatisch-elektronische Steuereinheit zum Steuern der Bewegung des Reinigungsspachtels während des Reinigungsbetriebs vorgesehen.

In Weiterbildung der Erfindung sind das Außenrohr und die Einrichtung zum Reinigen des Außenumfangs des Außenrohrs unter einer gemeinsamen Schutzhaube angeordnet.

Dadurch sind für die Reinigungseinrichtung keine zusätzlichen Durchbrechungen oder Durchführungen in der Schutzhaube erforderlich.

Bei einem erfindungsgemäßen Verfahren ist in einem Reinigungsbetrieb das Bewegen des auf dem Außenumfang des Außenrohrs aufliegenden Reinigungsspachtels parallel zur Mittellängsachse entlang dem Außenumfang während gleichzeitiger Drehung der Außentrommel vorgesehen.

Auf diese Weise kann bei einer Linearbewegung des Reinigungsspachtels der vollständige Außenumfang des Außenrohrs schnell und zuverlässig gereinigt werden. Der Reinigungsspachtel legt dann auf dem Außenrohr eine wendelförmige Bahn zurück, mit der bei entsprechender Abstimmung der Geschwindigkeit des Reinigungsspachtels und der Umfangsgeschwindigkeit des Außenumfangs die vollständige Fläche des Außenumfangs abgedeckt werden kann.

In Weiterbildung der Erfindung ist das Bewegen des auf dem Außenumfang des Außenrohrs aufliegenden Reinigungsspachtels in einer ersten Bewegungsrichtung über die gesamte Länge eines mit Durchgangsöffnungen versehenen Bereichs des Außenrohrs, dann das Abheben des Reinigungsspachtels von dem Außenumfang des Außenrohrs und anschließend das Bewegen des Reinigungsspachtels im abgehobenen Zustand in einer zweiten, der ersten Bewegungsrichtung entgegengesetzten Richtung vorgesehen.

Eine gute Reinigungswirkung des Reinigungsspachtels wird nur während der Bewegung in der ersten Bewegungsrichtung erzielt, da der Reinigungsspachtel dann schräg zur Mittellängsachse des Außenrohrs und auch schräg gegen die Bewegungsrichtung des Außenrohrs angestellt ist. Bei der Rückbewegung wird der Reinigungsspachtel dahingegen von dem Außenumfang abgehoben, da in dieser Bewegungsrichtung keine so gute Reinigungswirkung mehr erzielt werden könnte und auch die mechanische Belastung der Oberfläche des Außenumfangs der Außentrommel gering gehalten werden soll.

In Weiterbildung der Erfindung ist das Besprühen des Außenumfangs des Außenrohrs mittels der Sprühdüsen mit einer Reinigungsflüssigkeit im Reinigungsbetrieb vorgesehen.

Auf diese Weise können Produktreste auf der Außentrommel angelöst, aufgeweicht oder auch verflüssigt werden, um eine zuverlässige und gründliche Reinigung zu erzielen. Vorteilhafterweise sind die Sprühdüsen im Bereich des Reinigungsspachtels angeordnet und werden mit diesem zusammen bewegt, um die Reinigungsflüssigkeit punktgenau und beispielsweise unmittelbar vor dem Reinigungsspachtel auf den Außenumfang der Außentrommel aufzubringen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine abschnittsweise schematische Seitenansicht einer erfindungsgemäßen Vorrichtung,
- Fig. 2: die Einrichtung zum Reinigen aus Fig. 1 in einer Ansicht von schräg oben,
- Fig. 3: die Einrichtung der Fig. 2 in einer Ansicht von vorne,
- Fig. 4: die Einrichtung der Fig. 2 in einer Ansicht von hinten,
- Fig. 5: eine schematische abschnittsweise Ansicht der Vorrichtung der Fig. 1 von oben und
- Fig. 6: eine schematische abschnittsweise Schnittansicht der Vorrichtung der Fig. 1.

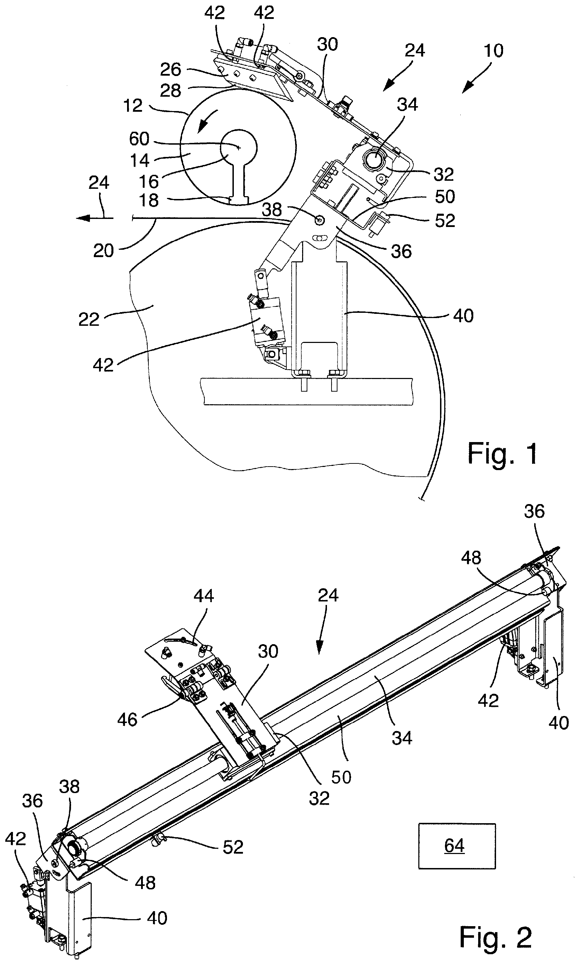

Fig. 1 zeigt in einer Seitenansicht eine Vorrichtung 10 zum Vertropfen eines fließfähigen Produkts. Die Vorrichtung weist ein lediglich schematisch dargestelltes Außenrohr 12 auf, das drehbar auf einem Kern 14 angeordnet ist und mit mehreren, gleichmäßig über den Außenumfang des Außenrohrs 12 verteilten Durchgangsöffnungen versehen ist. Ein zu vertropfendes Produkt wird über eine Zuführeinrichtung 16 im Kern 14 zugeführt und zu einer Verteilvorrichtung 18, einer sogenannten Düsenleiste geleitet, die am Innenumfang des Außenrohrs 12 anliegt. Durch die Verteilvorrichtung 18 wird das fließfähige Produkt durch die Durchgangsöffnungen in dem Außenrohr 12 gedrückt und wird in Tropfenform auf einem umlaufenden Stahlband 20 abgelegt. Das Stahlband läuft über zwei Trommeln 22 um, von denen in Fig. 1 lediglich eine abschnittsweise dargestellt ist.

Das Außenrohr dreht sich in Fig. 1 entgegen dem Uhrzeigersinn und das Stahlband 20 bewegt sich in Richtung des Pfeils 24. Unterhalb des Außenrohrs 12 auf dem Stahlband 20 abgelegte Produkttropfen werden dadurch in der Darstellung der Fig. 1 nach links abgeführt. Die Produkttropfen verfestigen sich während des Transports auf dem Stahlband 20 und können dann in bekannter Weise in fester Form von dem Stahlband abgenommen werden.

Bei bestimmten zu vertropfenden Produkten kann es erforderlich sein, den Außenumfang des Außenrohrs 12 permanent oder von Zeit zu Zeit zu reinigen, so dass keine auf dem Außenumfang anhaftende Produktreste vorhanden sind, die die Qualität der hergestellten Pastillen negativ beeinflussen können.

Um eine Reinigung des Außenumfangs des Außenrohrs 12 zu ermöglichen, ist eine Einrichtung 24 zum Reinigen des Außenumfangs des Außenrohrs 12 vorgesehen. Die Einrichtung 24 weist einen Reinigungsspachtel 26 auf, der aus gummielastischem Material besteht und schräg gegen die Bewegungsrichtung des Außenrohrs 12 angestellt ist. Es ist in Fig. 1 zu erkennen, dass eine Vorderkante 28 des Reinigungsspachtels 26 durch eine Oberseite des plattenförmigen Reinigungsspachtels und eine auf der Unterseite angeordnete angeschrägte Fläche gebildet ist. Die angeschrägte Fläche auf der Unterseite des Reinigungsspachtels 26 ermöglicht es, diesen sehr flach und in einem kleinen Winkel zum Außenumfang des Außenrohrs 12 anzuordnen. Die schräge Anstellung der Vorderkante gegen die Bewegungsrichtung des Außenrohrs 12 verhindert ein Mitziehen des Reinigungsspachtels durch das sich drehende Außenrohr 12 und bewirkt ein Abheben von Produktresten auf dem Außenumfang des Außenrohrs 12 durch den Reinigungsspachtel 26.

Der Reinigungsspachtel 26 ist dabei, wie in Fig. 1 zu erkennen ist und wie bereits ausgeführt wurde, schräg zum Außenumfang des Außenrohrs 12 angeordnet. Die Anordnung erfolgt so, dass im an den Außenumfang angelegten Zustand auf einer in Bewegungsrichtung des Reinigungsspachtels vorne liegenden Seite eine sich an die Vorderkante 28 des Reinigungsspachtels anschließende Fläche des Reinigungsspachtels, in Fig. 1 also die verdeckte Oberseite des Reinigungsspachtels 26, und der Außenumfang des Außenrohrs einen Winkel von mehr als 90°, insbesondere mehr als 135°, einschließen. Dadurch können mit dem Reinigungsspachtel 26 Produktreste vom Außenumfang des Außenrohrs 12 abgehoben werden.

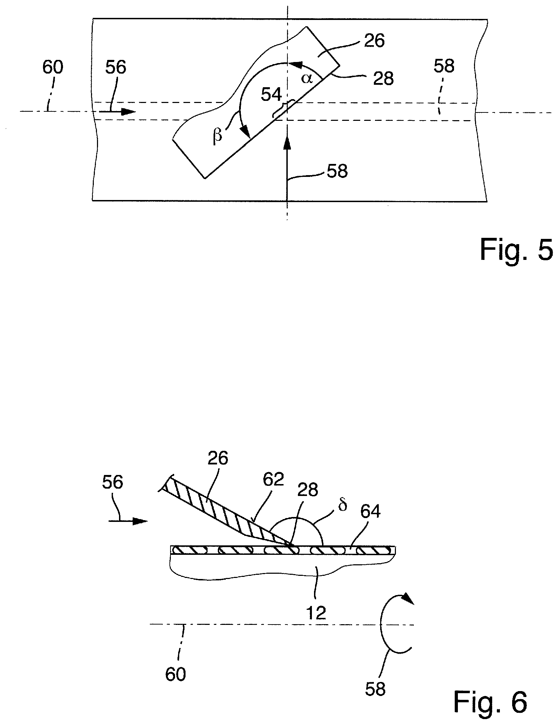

Weiter ist der Reinigungsspachtel derart schräg zur Bewegungsrichtung des Außenrohrs angestellt, dass im an den Außenumfang angelegten Zustand und bei sich im Reinigungsbetrieb drehendem Außenrohr die Vorderkante 28 des Reinigungsspachtels schräg gegen die Bewegungsrichtung des Außenrohrs im Berührungsbereich zwischen Reinigungsspachtel und Außenumfang des Außenrohrs angeordnet ist. Ein in Bewegungsrichtung des Reinigungsspachtels vor der Mitte des Berührungsbereichs liegender Abschnitt der Vorderkante 28 schließt dann, von oben gesehen und gegen den Uhrzeigersinn gemessen, siehe Fig. 5, mit der Bewegungsrichtung des Außenrohrs einen kleineren Winkel ein als ein in Bewegungsrichtung hinter der Mitte des Berührungsbereichs liegender Abschnitt der Vorderkante. Beispielweise schließt die Vorderkante 28 des Reinigungsspachtels 26 mit der Bewegungsrichtung des Außenrohrs 12 einen Winkel von 45° ein. Vor der Mitte des Berührungsbereichs liegt zwischen der Vorderkante 28 und der Bewegungsrichtung des Außenrohrs dann ein Winkel von 45°, wohingegen zwischen der Bewegungsrichtung des Außenrohrs und der Vorderkante 28 hinter der Mitte des Berührungsbereichs ein Winkel von 135° liegt. Auf diese Weise ist also die Vorderkante 28 schräg zur Bewegungsrichtung des Außenrohrs und gleichzeitig gegen die Bewegungsrichtung des Außenrohrs 12 angestellt.

Der Reinigungsspachtel 26 ist an einer Haltestrebe 30 angeordnet, die an einem Schlitten 32 einer Linearführung angeordnet ist. Speziell ist der Schlitten 32 verschiebbar auf einer Führungsstange 34 angeordnet. Die Linearführung ist dabei als pneumatischer Linearantrieb ausgebildet.

Die Führungsstange 34 ist wiederum, siehe auch Fig. 2, an zwei Schwenkhebeln 36 angeordnet von denen in Fig. 1 lediglich einer erkennbar ist. Die Schwenkhebel 36 sind als zweiseitige Hebel ausgebildet und etwa mittig über eine Schwenkachse 38 mit einem fest angeordneten Maschinengestell 40 verbunden. Die beiden Schwenkhebel 36 sind mittels eines Querträgers 50 starr miteinander verbunden. Das dem Ende mit der Führungsstange 34 gegenüberliegende Ende jedes Schwenkhebels 36 ist gelenkig mit einem Pneumatikzylinder 42 verbunden, der auf seiner gegenüberliegenden Seite mit dem Maschinengestell 40 verbunden ist. Die Schwenkhebel 36 können somit mittels der Pneumatikzylinder 42 um die Schwenkachse 38 verschwenkt werden. Speziell können die Schwenkhebel 36 ausgehend von der in Fig. 1 dargestellten Position, in der die Vorderkante 28 des Reinigungsspachtels 26 auf dem Außenumfang des Außenrohrs 12 anliegt, in eine zweite Stellung verschwenkt werden, in der der Reinigungsspachtel 26 von dem Außenrohr 12 abgehoben ist. Hierzu bewegen die Pneumatikzylinder 42 das ihnen zugeordnete Ende der Schwenkhebel 36 nach oben. Infolgedessen bewegt sich der Reinigungsspachtel 26 dann im Uhrzeigersinn von dem Außenumfang des Außenrohrs 12 weg.

Mittels des Linearantriebs kann der Schlitten 32 entlang der Führungsstange 34 bewegt werden, in Fig. 1 also in die Bildebene hinein und umgekehrt. Eine solche Bewegung des Schlittens 32 dient dazu, den Reinigungsspachtel 26 parallel zur Mittellängsachse 60 des Außenrohrs 12 zu bewegen. Darüber hinaus kann über die Pneumatikzylinder 42 der Reinigungsspachtel 26 vom Außenumfang des Außenrohrs 12 abgehoben werden.

In einem Reinigungsbetrieb wird der Reinigungsspachtel 26 an ein erstes, in Fig. 1 auf der Seite des Betrachters liegendes Ende der Außentrommel 12 bewegt. In dieser Stellung wird der Reinigungsspachtel 26 dann mittels der Pneumatikzylinder 42 in die in Fig. 1 dargestellte Stellung bewegt, so dass also die Vorderkante 28 des Reinigungsspachtels 26 auf dem Außenumfang des Außenrohrs 12 anliegt. Daraufhin wird der Schlitten 32 relativ zur Führungsstange 34 bewegt, in Fig. 1 in die Bildebene hinein, während sich das Außenrohr 12 wie in Fig. 1 dargestellt gegen den Uhrzeigersinn dreht. Eine Bewegungsgeschwindigkeit des Schlittens 32 entlang der Führungsstange ist dabei so auf die Umdrehungsgeschwindigkeit des Außenrohrs abgestimmt, dass mittels des Reinigungsspachtels 26 der vollständige Außenumfang des Außenrohrs 12 gereinigt werden kann, zumindest der Bereich des Außenumfangs, der mit Durchgangsöffnungen zum Erzeugen von Produkttropfen versehen ist.

Sobald der Reinigungsspachtel 26 an dem in Fig. 1 dem Betrachter abgewandten Ende des Außenrohrs 12 angeordnet ist, werden die Pneumatikzylinder 42 betätigt und der Reinigungsspachtel 26 wird vom Außenrohr 12 abgehoben. Im abgehobenen Zustand wird der Reinigungsspachtel 26 dann über eine Relativbewegung des Schlittens 32 zum Führungsstab 34 wieder in die Anfangsposition zurückgefahren, in der also der Führungsschlitten 32 und der Reinigungsspachtel 26 an dem in Fig. 1 dem Betrachter zugewandten Ende der Führungsstange 34 bzw. des Außenrohrs 12 angeordnet sind. Ein weiterer Reinigungsvorgang wird dann dadurch eingeleitet, dass der Reinigungsspachtel 26 über eine Betätigung der Pneumatikzylinder 42 wieder an den Außenumfang des Außenrohrs 12 angelegt wird und dann wieder der Schlitten 32 entlang dem Führungsrohr 34 bewegt wird.

In Fig. 1 sind an der Halterung 30 im Bereich des Reinigungsspachtels 26 Sprühdüsen 42 zu erkennen. Die Sprühdüsen 42 sind dafür vorgesehen, Reinigungsflüssigkeit auf den Außenumfang des Außenrohrs 12 zu sprühen. Die Sprühdüsen 42 sind so angeordnet, dass sie die Reinigungsflüssigkeit auf einen vor der Vorderkante 28 des Reinigungsspachtels 26 liegenden Bereich des Außenrohrs 12 sprühen, bezogen auf eine Bewegungsrichtung des Reinigungsspachtels 26 im Reinigungsbetrieb, also in dem in Fig. 1 dargestellten Zustand, in dem die Vorderkante 28 an dem Außenrohr 12 anliegt. Zuleitungen für die Reinigungsflüssigkeit zu den Düsen 42 sind in Fig. 1 der Übersichtlichkeit halber nur schematisch angedeutet.

Der Reinigungsspachtel 26 besteht aus einem gummielastischen Material, insbesondere Vulkollan, so dass eine gute Reinigungswirkung bei gleichzeitig geringer mechanischer Belastung einer eventuellen Beschichtung auf dem Außenumfang des Außenrohrs 12 erzielt wird.

Die Darstellung der Fig. 2 zeigt die Einrichtung 24 zum Reinigen von schräg oben. Der Schlitten 32 ist in Fig. 2 in einer Position zwischen dem in Fig. 2 linken Ende und dem rechten Ende der Führungsstange 34 dargestellt. Zu erkennen ist die plattenförmige Ausbildung der Halterung 30, die einerseits am Schlitten 32 befestigt ist und an deren anderem, freiem Ende der in Fig. 2 nicht erkennbare Reinigungsspachtel angeordnet ist, vgl. Fig. 1. Der Abschnitt der Halterung 30, an dem der Reinigungsspachtel 26 befestigt ist, kann dabei über Klemmscharniere 46 gegenüber dem Abschnitt der Halterung 30, die mit dem Schlitten 32 verbunden ist, abgeklappt werden. Dadurch ist der Reinigungsspachtel 26 für Wartungsarbeiten oder einen Austausch gut zugänglich. Zu erkennen ist in Fig. 2 ein gebogenes Langloch 44 in dem Abschnitt der Halterung 30, in dem der Reinigungsspachtel 26 befestigt ist. Durch das gekrümmte Langloch 44 erstreckt sich eine Klemmschraube, über die ein Winkel des Reinigungsspachtels 26 zur Mittellängsachse 60 des Außenrohrs 12, in Fig. 2 also auch zur Mittellängsachse der Führungsstange 34, eingestellt werden kann.

Die Klemmscharniere 46 sind vorgesehen, um den Abschnitt der Halterung 30, an dem der Reinigungsspachtel 26 befestigt ist, zu verschwenken und dann in der gewünschten Schwenklage arretieren zu können. Dadurch kann auch ein Winkel, in dem der Reinigungsspachtel 26 zum Außenumfang des Außenrohrs 12 angeordnet ist, eingestellt werden.

Im Bereich des linken Endes und des rechten Endes der Führungsstange 34 ist jeweils ein Näherungsschalter 48 zu erkennen. Mittels dieser Näherungsschalter 48 wird eine Annährung des Schlittens 32 detektiert. Auf diese Weise kann das Abheben bzw. Anlegen des Reinigungsspachtels 26 auf den Außenumfang des Außenrohrs 12 in den vordefinierten Endpositionen bewirkt werden. In Fig. 2 ist noch ein weiterer Näherungsschalter 52 zu erkennen, siehe auch Fig. 1, der ein Signal erzeugt, wenn der Schlitten 32 sich dem in Fig. 2 linken Ende der Führungsstange 34 annähert.

In der Darstellung der Fig. 2 ist auch zu erkennen, dass das Maschinengestell 40 zwei voneinander beabstandete Träger aufweist, und dass an jedem dieser Träger ein Pneumatikzylinder 42 befestigt ist. Die Führungsstange ist wiederum an dem Querträger 50 befestigt, der einerseits die beiden Enden der Führungsstange 34 trägt und der andererseits die beiden Schwenkhebel 36 miteinander verbindet, die, wie ausgeführt wurde, um die Schwenkachse 38 schwenkbar mit den beiden Trägern des Maschinengestells 40 verbunden sind.

Mittels der Vorrichtung 10 der Fig. 1, die mit der Einrichtung zum Reinigen 24 versehen ist, kann eine automatische Reinigung des Außenrohrs 12 beispielsweise per Knopfdruck oder automatisch in regelmäßigen Zeitabständen erfolgen. Besonders vorteilhaft ist eine solche automatische Reinigung, entsprechend einem regelmäßig stattfindenden Reinigungsbetrieb, beim Vertropfen von Produkten wie Urea, Ammoniumnitrat oder sonstigen diversen Düngemitteln. Beispielsweise können mittels der Einrichtung 24 und speziell dem Reinigungsspachtel 26 auskristallisierte Produktreste kratzfrei und schonend von dem Außenumfang des Außenrohrs 12, der beispielsweise beschichtet ist, entfernt werden.

Eine Bewegung des Reinigungsspachtels 26 erfolgt mittels des pneumatischen Linearantriebs mittels des Schlittens 32 und des Führungsrohrs 34 sowie mittels der beiden Pneumatikzylinder 42. Gerade bei explosionsgefährdeten Stoffen, wie beispielsweise Ammoniumnitrat, kann die Einrichtung 24 dadurch gefahrlos eingesetzt werden. Es ist insbesondere möglich, die Einrichtung 24 zusammen mit dem Außenrohr 12 unter einer gemeinsamen Schutzhaube anzuordnen. Eine solche Schutzhaube kann eine gewünschte Atmosphäre bereitstellen, die das Auskristallisieren oder auch nur Antrocknen von Produktresten auf dem Außenrohr 12 verhindert oder zumindest verzögert.

Wie bereits beschrieben wurde, kann der Reinigungsspachtel 26 zusammen mit dem Schwenkhebel 36 vom Außenrohr 12 abgehoben und dadurch abgeklappt werden. Im abgeklappten Zustand ist der Reinigungsspachtel 26 dann für Reinigungs- oder Wartungsarbeiten gut zugänglich. Eine weitere Erleichterung der Reinigung erfolgt durch die Klemmscharniere 46. Der Abschnitt der Halterung 30 mit dem Reinigungsspachtel 26 kann dadurch so umgeklappt werden, dass der Reinigungsspachtel 26 für einen Austausch sehr gut zugänglich ist.

Die Einrichtung 24 zum Reinigen kann problemlos an bestehenden Vorrichtungen zum Vertropfen von fließfähigen Produkten nachgerüstet werden.

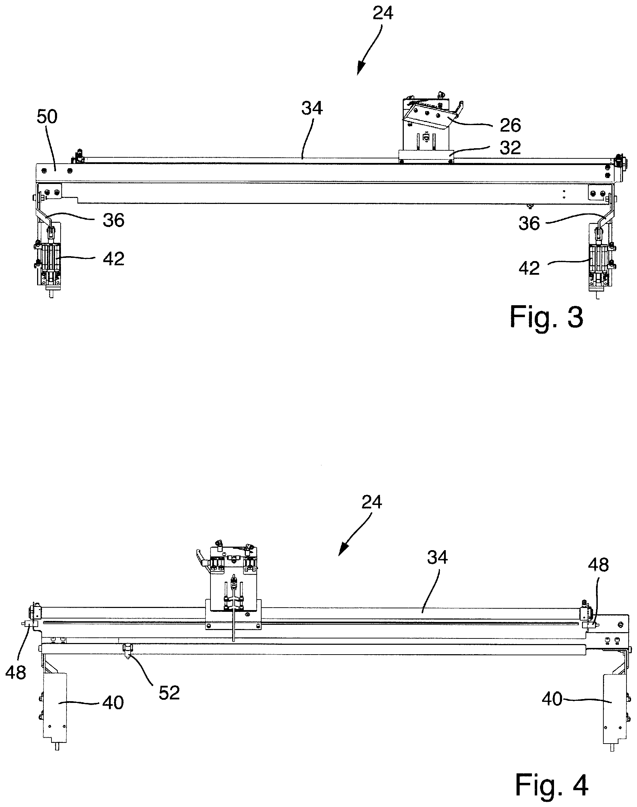

Die Darstellung der Fig. 3 zeigt eine Vorderansicht der Einrichtung 24 der Fig. 2. Zu erkennen ist der Reinigungsspachtel 26 sowie auch die Anordnung der Führungsstange 34 mit dem Schlitten 32 und die Ausbildung des Trägers 50. Die Schwenkarme 36 sind abgekröpft ausgebildet, um die Pneumatikzylinder 42 am linken bzw. rechten Ende des Trägers 50 nicht über diesen hinausragen zu lassen.

Fig. 4 zeigt eine Ansicht der Einrichtung 24 der Fig. 2 von hinten. In dieser Ansicht ist die Ausbildung der Träger des Maschinengestells 40 zu erkennen und auch die Führungsstange 34 ist gut sichtbar dargestellt.

Sobald ein Reinigungsbetrieb angefordert oder automatisch ausgelöst wird, wird der Reinigungsspachtel 26 entweder in die in Fig. 2 links befindliche Endposition bewegt oder er befindet sich zu Beginn des Reinigungsbetriebs bereits in dieser links angeordneten Endposition. Wie bereits erläutert wurde, kann das Erreichen bzw. die Einnahme dieser Endposition mittels des Näherungsschalters 48 festgestellt werden.

Ausgehend von dieser linken Endposition wird der Schlitten 32 in Fig. 2 nach rechts entlang der Führungsstange 34 bewegt, bis mittels des Sensors 52 eine definierte Zwischenposition des Schlittens 32 detektiert wird. Bei der Bewegung von der linken Endposition bis zu der Zwischenposition, die durch den Sensor 52 detektiert wird, befindet sich der Reinigungsspachtel 26 noch im abgehobenen Zustand vom Außenrohr 12. Die Zwischenposition entspricht dem linken Ende des Außenrohrs bzw. dem Beginn des Bereichs des Außenrohrs, das mit Durchgangsöffnungen zum Vertropfen eines fließfähigen Produkts versehen ist. Der Bereich des Außenrohrs 12, der mit den Durchgangsöffnungen versehen ist, soll ja mittels des Reinigungsspachtels 26 gereinigt werden.

In dieser Zwischenposition, die durch den Sensor 52 detektiert wird, hält der Schlitten 32 an. Die Haltedauer kann dann einige Sekunden betragen. In dieser Zwischenposition werden dann die Pneumatikzylinder 42 aktiviert und der Reinigungsspachtel 26 wird über eine Verschwenkung der Schwenkhebel 36 in die in Fig. 1 dargestellte Position gebracht, in der die Vorderkante 28 des Reinigungsspachtels 26 auf dem Außenumfang des Außenrohrs 12 anliegt. Während dieses Vorgangs dreht sich das Außenrohr 12 in der in Fig. 1 angedeuteten Richtung. Zusammen mit diesem Anklappvorgang des Reinigungsspachtels 26 wird ein Magnetventil geöffnet und Reinigungsflüssigkeit, insbesondere Wasser, strömt zu den Sprühdüsen 42, so dass der Außenumfang des Außenrohrs 12 im Bereich vor der Vorderkante 28 des Reinigungsspachtels 26 mit der Reinigungsflüssigkeit besprüht wird.

Der eigentliche Reinigungsvorgang beginnt dann dadurch, dass der Schlitten 32 in Fig. 2 entlang der Führungsstange 34 nach rechts bewegt wird. Wie ausgeführt wurde, liegt die Vorderkante 28 des Reinigungsspachtels 26 während dieser Bewegung entlang der Führungsstange 34 auf dem Außenumfang des Außenrohrs 12 an und das Außenrohr 12 dreht sich dabei. Die Bewegungsgeschwindigkeit des Schlittens 32 ist dabei so auf die Drehgeschwindigkeit des Außenrohrs 12 abgestimmt, dass die Vorderkante 28 des Reinigungsspachtels 26 den vollständigen Außenumfang des Außenrohrs 12, der mit Durchgangsöffnungen versehen ist, überstreicht und eventuell dort anhaftende Produktreste abhebt. Die mit den Sprühdüsen 42 aufgebrachte Reinigungsflüssigkeit unterstützt dabei den Reinigungsvorgang.

Der Schlitten 32 wird während dieser Reinigung gleichmäßig und mit konstanter Geschwindigkeit bis zu dem in Fig. 2 rechten Ende der Führungsstange 34 bewegt. Wenn sich der Schlitten 32 in der rechten Endposition befindet, wird dies durch den Näherungssensor 48 am rechten Ende der Einrichtung 24 detektiert. Sobald der Schlitten 32 in der rechten Endposition angekommen ist, werden wieder die Pneumatikzylinder 42 aktiviert und der Reinigungsspachtel 26 wird durch Verschwenken der Schwenkhebel 36 um die Schwenkachse 38 von dem Außenrohr 12 abgehoben. In dieser abgehobenen Position des Reinigungsspachtels 26 wird der Schlitten 32 dann wieder in Fig. 2 nach links in die linke Endposition gefahren, die durch den am linken Ende angeordneten Näherungssensor 48 detektiert wird. Der Schlitten 32 und der Reinigungsspachtel 26 befinden sich dann wieder in der Ausgangsposition für den Beginn eines weiteren Reinigungsvorgangs bzw. Reinigungsbetriebs. Das Magnetventil für die Zufuhr der Reinigungsflüssigkeit zu den Sprühdüsen 42 wird vorteilhafterweise bereits nach Erreichen der rechten Endposition des Schlittens 32 geschlossen, wenn also der eigentliche Reinigungsvorgang, währenddessen der Reinigungsspachtel 26 auf dem Außenrohr 12 aufliegt und entlang dem Außenrohr bewegt wird, abgeschlossen ist.

Selbstverständlich kann die Einrichtung 24 auch umgekehrt aufgebaut sein, dass also der Beginn des Reinigungsbetriebs am rechten Ende erfolgt und eine Bewegungsrichtung des Reinigungsspachtels in Anlage am Außenrohr 12 von rechts nach links erfolgt. Gemäß der Erfindung muss in einem solchen Fall aber auch der Reinigungsspachtel 26 so angeordnet werden, dass dieser nach Art eines Spachtels während seiner Bewegung parallel zum Außenrohr Produktreste vom Außenumfang des Außenrohrs 12 abhebt und gleichzeitig schräg zur Bewegungsrichtung des Außenumfangs angeordnet ist.

Die Darstellung der Fig. 5 zeigt eine schematische Darstellung zur Verdeutlichung der schrägen Anstellung der Vorderkante 28 des Reinigungsspachtels 26, vgl. Fig. 1. Der Reinigungsspachtel 26 ist abschnittsweise dargestellt und seine Vorderkante 28, die aufgrund ihrer Elastizität über einen Berührungsbereich 54 auf dem Außenumfang des Außenrohrs 12 aufliegt, wird in einer Bewegungsrichtung 56 parallel zur Mittellängsachse des Außenrohrs 12 bewegt. Die Bewegungsrichtung 56 ist durch die Längsrichtung der Führungsstange 34 vorgegeben. Die Vorderkante 28 überstreicht damit einen in Fig. 5 gestrichelt angedeuteten Bereich 58 des Außenumfangs des Außenrohrs. Während der Bewegung des Reinigungsspachtels 26 in der Bewegungsrichtung 56 dreht sich das Außenrohr 12, siehe Fig. 1. Die Bewegungsrichtung 58 des Außenumfangs des Außenrohrs 12 ist in Fig. 5 mittels des Pfeils 58 angedeutet. Der Berührungsbereich 54 der Vorderkante 28 des Reinigungsspachtels 26 legt infolgedessen auf dem Außenumfang des Außenrohrs 12 eine wendelförmige Bahn zurück. Die Steigung dieser wendelförmigen Bahn ist durch die Abstimmung der Geschwindigkeit des Reinigungsspachtels 26 in Bewegungsrichtung 56 und die Drehgeschwindigkeit des Außenrohrs 12 in der Bewegungsrichtung 58 so abgestimmt, dass die wendelförmige Bahn den gesamten Oberflächenbereich des Außenumfangs des Außenrohrs 12 überstreicht, der mit Durchgangsöffnungen zum Vertropfen eines fließfähigen Produkts versehen ist.

Weiter ist in Fig. 5 zu erkennen, dass die Vorderkante 28 derart schräg gegen die Bewegungsrichtung 58 des Außenrohrs 12 im Bereich 54 angeordnet ist, dass ein in der Bewegungsrichtung 56 des Reinigungsspachtels 26 vor der Mitte des Bereichs 54 liegender Abschnitt der Vorderkante 28 mit der Bewegungsrichtung 58 einen Winkel α einschließt, der kleiner ist als ein Winkel β, den die Bewegungsrichtung 58 mit dem hinter der Mitte des Bereichs 54 liegenden Abschnitt der Vorderkante 28 einschließt. Die Blickrichtung ist dabei von oben auf das Außenrohr 12 und den Reinigungsspachtel 26 und die Winkelmessung erfolgt im Uhrzeigersinn, beginnend an dem Abschnitt der Vorderkante 28, der vor der Mitte des Berührungsbereichs 54 liegt. Wenn die Vorderkante 28 in einem Winkel von 45° schräg zur Bewegungsrichtung 58 des Außenrohrs 12 angeordnet ist, so beträgt der Winkel zwischen dem in Bewegungsrichtung vor dem Bereich 54 liegenden Abschnitt der Vorderkante 28 und der Bewegungsrichtung 58 45°. Der Winkel zwischen der Bewegungsrichtung 58 und dem hinter dem Berührungsbereich 54 liegenden Abschnitt der Vorderkante 28 beträgt hingegen 135°. Eine solche Anordnung in der Vorderkante 28 kann die Spachtelwirkung des Reinigungsspachtels 26 und das Abheben der Produktreste gewährleisten und es wird auch verhindert, dass das Außenrohr 12 die Vorderkante 28 des Reinigungsspachtels 26 mitzieht und dann Produktreste nur großflächig auf dem Außenumfang des Außenrohrs 12 verteilt werden.

Fig. 6 zeigt eine abschnittsweise schematische Schnittansicht des Außenrohrs 12 und des Reinigungsspachtels 26. Mit einzeichnet ist eine Mittellängsachse 60 des Außenrohrs 12 und es ist angedeutet, dass sich das Außenrohr 12 in Richtung des gekrümmten Pfeils 58 um die Mittellängsachse 60 dreht. Der Reinigungsspachtel 26 wird entlang des Pfeils 56 relativ zum Außenrohr 12 bewegt. Der Reinigungsspachtel 26 ist auch in der Seitenansicht schräg zum Außenrohr 12 angeordnet, so dass auf einer in der Bewegungsrichtung 56 vorne liegenden Seite eine sich an die Vorderkante 28 des Reinigungsspachtels 26 anschließende Fläche 62 mit dem Außenumfang des Außenrohrs 12 einen Winkel δ von mehr als 90°, insbesondere mehr als 135°, einschließt. Auf diese Weise können mittels des Reinigungsspachtels 26 Produktreste von dem Außenumfang des Außenrohrs 12, das mit Durchgangsöffnungen 64 versehen ist, zuverlässig abgehoben werden.

## Patentansprüche

1. Vorrichtung zum Vertropfen eines fließfähigen Produkts mit einem Außenrohr (12), das drehbar auf einem Kern (14) angeordnet ist und mit mehreren Durchgangsöffnungen versehen ist, wobei in dem Kern (14) eine Zuführeinrichtung (16) für das zu vertropfende Produkt und eine am Innenumfang des Außenrohrs (12) anliegende Verteilvorrichtung (18) vorgesehen sind, **dadurch gekennzeichnet, dass** eine Einrichtung (24) zum Reinigen eines Außenumfangs des Außenrohrs (12) vorgesehen ist, wobei die Einrichtung (24) einen Reinigungsspachtel (26), eine sich parallel zu einer Mittellängsachse (60) des Außenrohrs (12) erstreckende Führungsschiene (34) für den Reinigungsspachtel (26) und erste Antriebsmittel zum Bewegen des Reinigungsspachtels (26) entlang der Führungsschiene (34) aufweist.

2. Vorrichtung nach Anspruch 1, **dadurch gekennzeichnet, dass** zweite Antriebsmittel zum Anlegen des Reinigungsspachtels (26) an den Außenumfang und zum Abheben des Reinigungsspachtels (26) von dem Außenumfang des Außenrohrs (12) vorgesehen sind.

3. Vorrichtung nach Anspruch 1 oder 2, **dadurch gekennzeichnet, dass** der Reinigungsspachtel (26) so angeordnet ist, dass im an den Außenumfang angelegten Zustand auf einer in Bewegungsrichtung (56) des Reinigungsspachtels (26) vorne liegenden Seite eine sich an eine Vorderkante (28) des Reinigungsspachtels anschließende Fläche (62) des Reinigungsspachtels (26) und der Außenumfang des Außenrohrs (12) einen Winkel (δ) von mehr als 90 Grad, insbesondere mehr als 135 Grad, einschließen.

4. Vorrichtung nach Anspruch 3, **dadurch gekennzeichnet, dass** der Reinigungsspachtel (26) so angeordnet ist, dass im an den Außenumfang angelegten Zustand und bei sich drehendem Außenrohr (12) die Vorderkante (28) des Reinigungsspachtels (26) schräg zur Bewegungsrichtung (58) des Außenrohrs (12) im Berührungsbereich (54) zwischen Reinigungsspachtel (26) und Außenumfang des Außenrohrs (12) angeordnet ist wobei ein in Bewegungsrichtung (56) des Reinigungsspachtels (26) vor der Mitte des Berührungsbereichs (54) liegender Abschnitt der Vorderkante (28) mit der Bewegungsrichtung (58) des Außenrohrs (12) einen kleineren Winkel (α) einschließt als ein in Bewegungsrichtung (56) des Reinigungsspachtels (26) hinter der Mitte des Berührungsbereichs (54) liegender Abschnitt der Vorderkante (28).

5. Vorrichtung nach einem der vorstehenden Ansprüche, **dadurch gekennzeichnet, dass** der Reinigungsspachtel (26) aus einem gummielastischen Werkstoff gebildet ist, insbesondere aus Polyester-Urethan-Kautschuk.

6. Vorrichtung nach wenigstens einem der vorstehenden Ansprüche, **dadurch gekennzeichnet, dass** wenigstens eine Sprühdüse (42) zum Besprühen des Außenumfangs des Außenrohrs (12) mit einer Reinigungsflüssigkeit vorgesehen ist.

7. Vorrichtung nach Anspruch 5, **dadurch gekennzeichnet, dass** die wenigstens eine Sprühdüse (42) im Bereich des Reinigungsspachtels (26) angeordnet ist und zusammen mit dem Reinigungsspachtel (26) bewegt wird.

8. Vorrichtung nach wenigstens einem der vorstehenden Ansprüche, **dadurch gekennzeichnet, dass** die ersten Antriebsmittel einen pneumatischen Linearantrieb aufweisen.

9. Vorrichtung nach wenigstens einem der vorstehenden Ansprüche, **dadurch gekennzeichnet, dass** die zweiten Antriebsmittel wenigstens einen pneumatischen Zylinder (42) aufweisen.

10. Vorrichtung nach wenigstens einem der vorstehenden Ansprüche, **gekennzeichnet durch** Positionssensoren (48, 52) an der Führungsschiene (34) zum Erfassen wenigstens von Endpositionen des Reinigungsspachtels (26).

11. Vorrichtung nach wenigstens einem der vorstehenden Ansprüche, **gekennzeichnet durch** eine pneumatische-elektronische Steuereinheit (64) zum Steuern der Bewegung des Reinigungsspachtels (26) während eines Reinigungsbetriebs.

12. Vorrichtung nach wenigstens einem der vorstehenden Ansprüche, **dadurch gekennzeichnet, dass** das Außenrohr (12) und die Einrichtung (24) zum Reinigen des Außenumfangs des Außenrohrs (12) unter einer gemeinsamen Schutzhaube angeordnet sind.

13. Verfahren zum Betreiben einer Vorrichtung nach wenigstens einem der vorstehenden Ansprüche, **gekennzeichnet durch**, in einem Reinigungsbetrieb, Bewegen des auf dem Außenumfang des Außenrohrs (12) aufliegenden Reinigungsspachtels (26) parallel zur Mittellängsachse (60) des Außenrohrs (12) entlang dem Außenumfang bei gleichzeitiger Drehung des Außenrohrs (12).

14. Verfahren nach Anspruch 13, **gekennzeichnet durch** Bewegen des auf dem Außenumfang des Außenrohrs (12) aufliegenden Reinigungsspachtels (26) in einer ersten Bewegungsrichtung (56) über die gesamte Länge eines mit Durchgangsöffnungen versehenen Bereichs des Außenrohrs (12), dann Abheben des Reinigungsspachtels (26) von dem Außenumfang des Außenrohrs (12) und Bewegen des Reinigungsspachtels (26) im abgehobenen Zustand in einer zweiten, der ersten Bewegungsrichtung (56) entgegengesetzten Richtung.

15. Verfahren nach Anspruch 13 oder 14, **gekennzeichnet durch** Besprühen des Außenumfangs des Außenrohrs (12) mittels der Sprühdüsen (42) mit einer Reinigungsflüssigkeit.

## Claims

1. Apparatus for dropletizing a flowable product, having an outer tube (12) which is arranged in a rotatable manner on a core (14) and which is provided with multiple passage openings, wherein, in the core (14), a feed device (16) for the product to be dropletized and a distribution apparatus (18) bearing against the inner circumference of the outer tube (12) are provided, **characterized in that** a device (24) for cleaning an outer circumference of the outer tube (12) is provided, wherein the device (24) has a cleaning spatula (26), a guide rail (34) for the cleaning spatula (26), which guide rail extends parallel to a central longitudinal axis (60) of the outer tube (12), and first drive means for moving the cleaning spatula (26) along the guide rail (34).

2. Apparatus according to claim 1, **characterized in that** second drive means for placing the cleaning spatula (26) onto the outer circumference, and for lifting the cleaning spatula (26) off from the outer circumference, of the outer tube (12) are provided.

3. Apparatus according to claim 1 or 2, **characterized in that** the cleaning spatula (26) is arranged such that, in the state of placement on the outer circumference, on a side which is situated at the front in the direction of movement (56) of the cleaning spatula (26), a surface (62) of the cleaning spatula (26) which adjoins a front edge (28) of the cleaning spatula (26) and the outer circumference of the outer tube (12) include an angle (δ) of greater than 90 degrees, in particular greater than 135 degrees.

4. Apparatus according to claim 3, **characterized in that** the cleaning spatula (26) is arranged such that, in the state of placement on the outer circumference and when the outer tube (12) rotates, the front edge (28) of the cleaning spatula (26) is arranged obliquely with respect to the direction of movement (58) of the outer tube (12) in the contact region (54) between the cleaning spatula (26) and the outer circumference of the outer tube (12), wherein a portion of the front edge (28) which is situated in front of the center of the contact region (54) in the direction of movement (56) of the cleaning spatula (26) includes with the direction of movement (58) of the outer tube (12) a smaller angle (α) than a portion of the front edge (28) which is situated behind the center of the contact region (54) in the direction of movement (56) of the cleaning spatula (26).

5. Apparatus according to one of the preceding claims, **characterized in that** the cleaning spatula (26) is formed from a rubber-elastic material, in particular from polyester urethane rubber.

6. Apparatus according to at least one of the preceding claims, **characterized in that** at least one spray nozzle (42) for spraying the outer circumference of the outer tube (12) with a cleaning liquid is provided.

7. Apparatus according to claim 5, **characterized in that** the at least one spray nozzle (42) is arranged in the region of the cleaning spatula (26) and is moved together with the cleaning spatula (26).

8. Apparatus according to at least one of the preceding claims, **characterized in that** the first drive means have a pneumatic linear drive.

9. Apparatus according to at least one of the preceding claims, **characterized in that** the second drive means have at least one pneumatic cylinder (42).

10. Apparatus according to at least one of the preceding claims, **characterized by** position sensors (48, 52) on the guide rail (34) for detecting at least end positions of the cleaning spatula (26).

11. Apparatus according to at least one of the preceding claims, **characterized by** a pneumatic-electronic control unit (64) for controlling the movement of the cleaning spatula (26) during a cleaning operation.

12. Apparatus according to at least one of the preceding claims, **characterized in that** the outer tube (12) and the device (24) for cleaning the outer circumference of the outer tube (12) are arranged below a common protective hood.

13. Method for operating an apparatus according to at least one of the preceding claims, **characterized by** movement of the cleaning spatula (26), bearing on the outer circumference of the outer tube (12), parallel to the central longitudinal axis (60) of the outer tube (12) along the outer circumference, with simultaneous rotation of the outer tube (12), during a cleaning operation.

14. Method according to claim 13, **characterized by** movement of the cleaning spatula (26), bearing on the outer circumference of the outer tube (12), in a first direction of movement (56) over the entire length of a region of the outer tube (12) which is provided with passage openings, and then lifting-off of the cleaning spatula (26) from the outer circumference of the outer tube (12) and movement of the cleaning spatula (26) in the lifted-off state in a second direction, which is opposite the first direction of movement (56).

15. Method according to claim 13 or 14, **characterized by** spraying of the outer circumference of the outer tube (12) by means of the spray nozzles (42) with a cleaning liquid.

## Revendications

1. Dispositif de formation de gouttelettes à partir d'un produit coulant, comprenant un tube extérieur (12) qui est disposé de manière rotative sur un noyau (14) et qui est pourvu de plusieurs ouvertures de passage, dans le noyau (14) étant prévus un dispositif d'amenée (16) pour le produit à former en gouttelettes et un dispositif de distribution (18) s'appliquant contre la périphérie intérieure du tube extérieur (12), **caractérisé en ce qu'**un agencement (24) est prévu pour nettoyer une périphérie extérieure du tube extérieur (12), l'agencement (24) présentant une spatule de nettoyage (26), un rail de guidage (34) s'étendant parallèlement à un axe longitudinal médian (60) du tube extérieur (12) pour la spatule de nettoyage (26), et des premiers moyens d'entraînement pour déplacer la spatule de nettoyage (26) le long du rail de guidage (34).

2. Dispositif selon la revendication 1, **caractérisé en ce que** des deuxièmes moyens d'entraînement pour l'application de la spatule de nettoyage (26) contre la périphérie extérieure et pour soulever la spatule de nettoyage (26) de la périphérie extérieure du tube extérieur (12) sont prévus.

3. Dispositif selon la revendication 1 ou 2, **caractérisé en ce que** la spatule de nettoyage (26) est disposée de telle sorte que dans l'état appliqué contre la périphérie extérieure, sur un côté situé à l'avant dans la direction de déplacement (56) de la spatule de nettoyage (26), une surface (62) de la spatule de nettoyage (26) se raccordant à une arête avant (28) de la spatule de nettoyage et la périphérie extérieure du tube extérieur (12) forment un angle (δ) supérieur à 90°, en particulier supérieur à 135°.

4. Dispositif selon la revendication 3, **caractérisé en ce que** la spatule de nettoyage (26) est disposée de telle sorte que dans l'état appliqué contre la périphérie extérieure et lorsque le tube extérieur (12) tourne, l'arête avant (28) de la spatule de nettoyage (26) soit disposée obliquement par rapport à la direction de déplacement (58) du tube extérieur (12) dans la région de contact (54) entre la spatule de nettoyage (26) et la périphérie extérieure du tube extérieur (12), une portion d'arête avant (28) située avant le centre de la région de contact (54), dans la direction de déplacement (56) de la spatule de nettoyage (26), formant avec la direction de déplacement (58) du tube extérieur (12), un angle plus petit (α) qu'une portion d'arête avant (28) située derrière le centre de la région de contact (54), dans la direction de déplacement (56) de la spatule de nettoyage (26).

5. Dispositif selon l'une quelconque des revendications précédentes, **caractérisé en ce que** la spatule de nettoyage (26) est formée par un matériau ayant l'élasticité du caoutchouc, en particulier par du caoutchouc polyester-uréthane.

6. Dispositif selon au moins l'une quelconque des revendications précédentes, **caractérisé en ce qu'**au moins une buse de pulvérisation (42) est prévue pour pulvériser la périphérie extérieure du tube extérieur (12) avec un liquide de nettoyage.

7. Dispositif selon la revendication 5, **caractérisé en ce que** l'au moins une buse de pulvérisation (42) est disposée dans la région de la spatule de nettoyage (26) et est déplacée conjointement avec la spatule de nettoyage (26).

8. Dispositif selon au moins l'une quelconque des revendications précédentes, **caractérisé en ce que** les premiers moyens d'entraînement présentent un entraînement linéaire pneumatique.

9. Dispositif selon au moins l'une quelconque des revendications précédentes, **caractérisé en ce que** les deuxièmes moyens d'entraînement présentent au moins un cylindre pneumatique (42).

10. Dispositif selon au moins l'une quelconque des revendications précédentes, **caractérisé par** des capteurs de positionnement (48, 52) au niveau du rail de guidage (34), pour détecter au moins des positions d'extrémité de la spatule de nettoyage (26).

11. Dispositif selon au moins l'une quelconque des revendications précédentes, **caractérisé par** une unité de commande pneumatique-électronique (64) pour commander le déplacement de la spatule de nettoyage (26) pendant un mode de nettoyage.

12. Dispositif selon au moins l'une quelconque des revendications précédentes, **caractérisé en ce que** le tube extérieur (12) et l'agencement (24) pour nettoyer la périphérie extérieure du tube extérieur (12) sont disposés sous un capot de protection commun.

13. Procédé pour faire fonctionner un dispositif selon au moins l'une quelconque des revendications précédentes, **caractérisé par** le déplacement, dans un mode de nettoyage, de la spatule de nettoyage (26) posée sur la périphérie extérieure du tube extérieur (12) parallèlement à l'axe longitudinal médian (60) du tube extérieur (12) le long de la périphérie extérieure avec rotation simultanée du tube extérieur (12).

14. Procédé selon la revendication 13, **caractérisé par** le déplacement de la spatule de nettoyage (26) posée sur la périphérie extérieure du tube extérieur (12) dans une première direction de déplacement (56) sur toute la longueur d'une région du tube extérieur (12) pourvue d'ouvertures de passage, puis le soulèvement de la spatule de nettoyage (26) de la périphérie extérieure du tube extérieur (12) et le déplacement de la spatule de nettoyage (26) dans l'état soulevé dans une deuxième direction opposée à la première direction de déplacement (56).

15. Procédé selon la revendication 13 ou 14, **caractérisé par** la pulvérisation de la périphérie extérieure du tube extérieur (12) avec un liquide de nettoyage au moyen des buses de pulvérisation (42).
